# FASCICULE DE BREVET EUROPEEN

(11) **EP 2 655 671 B1**
(45) Date de publication et mention de la délivrance du brevet: **28.08.2019**
(21) Numéro de dépôt: 11815472.3
(22) Date de dépôt: 20.12.2011
(51) Int. Cl.: C21B 5/06, C21B 7/00, C21B 5/00, F27D 17/00

(54) **PROCEDE D'OPERATION D'UNE INSTALLATION DE HAUT FOURNEAU AVEC RECYCLAGE DE GAZ DE GUEULARD ET HAUT FOURNEAU**
VERFAHREN ZUM BETRIEB EINER HOCHOFENANLAGE MIT GICHTGAS-RECYCLING UND HOCHOFENANLAGE
PROCESS FOR OPERATING A BLAST FURNACE INSTALLATION WITH TOP GAS RECYCLING AND BLAST FURNACE

(30) Priorité: 21.12.2010 FR 1060908
(43) Date de publication de la demande: 30.10.2013
(73) Titulaire: L'Air Liquide Société Anonyme pour l'Etude et l'Exploitation des Procédés Georges Claude, 75007 Paris (FR)
(72) Inventeur: BLOSTEIN, Philippe, F-75014 Paris (FR); DEVAUX, Michel, F-77680 Roissy-en-brie (FR); DUBETTIER-GRENIER, Richard, F-94210 La Varenne Saint Hilaire (FR)
(74) Mandataire: De Vleeschauwer, Natalie Y.L.D.
(86) Numéro de dépôt international: PCT/FR2011/053095
(87) Numéro de publication internationale: WO 2012/085449

(56) Documents cités:
- EP-A2- 0 793 071
- DE-A1- 2 037 541
- GB-A- 2 437 958

## Description

La présente invention concerne l'opération d'installations de haut fourneau et en particulier l'opération de telles installations comportant un haut fourneau de type à recyclage des gaz de gueulard.

Il est connu, notamment des demandes internationales de brevet WO-A-2007/099246 et WO-A-2005/085727, d'enrichir l'air du vent d'un haut fourneau en oxygène au moyen d'oxygène généré par une unité de séparation des gaz de l'air (en anglais : « Air Separation Unit » ou « ASU »).

Il est également connu d'utiliser un haut fourneau à recyclage des gaz de gueulard, ci-après désigné par l'abréviation HFRG.

Le HFRG permet de réduire la consommation de coke dans le haut fourneau. Cette technologie est aussi une des solutions privilégiées envisagées par l'industrie sidérurgique pour réduire les émissions de CO₂ des hauts fourneaux par capture et/ou valorisation et/ou séquestration de CO₂ généré par les hauts fourneaux.

Dans la littérature, on trouve les dénominations suivantes pour ce type de haut fourneau :
- Haut fourneau à recyclage des gaz de gueulard (en anglais « Top Gas Recovery Blast Furnace » ou « TGRBF »),
- Haut fourneau ULCOS (en anglais: "Ultra Low CO2 Steelmaking Blast Furnace"),
- Haut fourneau tout oxygène (en anglais : « Oxygen Blast Furnace »), et
- Haut fourneau sans azote (en anglais : « Nitrogen Free Blast Furnace »).

Le principe à la base d'un HFRG est de séparer les gaz de gueulard issus du haut fourneau en au moins une fraction enrichie en CO₂ et une fraction enrichie en CO. La fraction enrichie en CO₂ est captée et séquestrée, utilisée sur le site ou, préférentiellement, valorisée. La fraction enrichie en CO est réinjectée dans le HFRG.

Pour une opération efficace d'un HFRG, les gaz de gueulard générés par le haut fourneau doivent consister majoritairement en oxydes de carbone (CO et CO₂). A cette fin, on utilise au lieu de l'air, un gaz plus riche en oxygène pour le vent injecté dans le HFRG .

Un exemple spécifique d'un tel HFRG connu est décrit dans DE-A-2037541. Selon ce procédé, on injecte une partie du gaz de gueulard recyclé mi-cuve comme gaz réducteur. Une deuxième partie du gaz de gueulard recyclé est mélangé avec de l'oxygène et ce mélange est injecté comme vent dans la partie inférieure ou base du haut fourneau. Afin de réaliser des températures analogues à celles réalisées avec un vent consistant en de l'air, il est proposé d'utiliser un mélange gaz de gueulard recyclé et oxygène ayant une teneur en oxygène identique à celle de l'air. Il est également envisageable d'utiliser des mélanges présentant d'autres teneurs en oxygène étant donné la moindre consommation de coke dans le HFRG et la réduction correspondante du besoin en vent pour la combustion du coke dans la base du haut fourneau.

On peut notamment prévoir une unité de séparation des gaz de l'air située à proximité du HFRG. Une telle unité de séparation des gaz de l'air reçoit de l'air comprimé, fourni par un compresseur d'air ou une soufflante, et sépare cet air comprimé en au moins un gaz riche en oxygène et un gaz riche en azote. Le gaz de l'air riche en oxygène est alors utilisé comme vent dans le HFRG.

Dans le présent contexte, on comprend par un gaz « riche en oxygène » un gaz ayant une teneur en oxygène supérieure à la teneur en oxygène de l'air (c'est-à-dire supérieure à 21,0%vol O₂ et jusqu'à 100,0%vol O₂) et on comprend par un gaz « riche en azote » un gaz ayant une teneur en azote supérieure à la teneur en azote de l'air (c'est-à-dire supérieure à 78,1%vol N₂ et jusqu'à 100,0%vol N₂).

En régime continu est donc injecté dans le HFRG au moins (a) un vent contenant du gaz riche en oxygène fourni par l'unité de séparation des gaz de l'air et (b) du gaz de gueulard enrichi en CO recyclé.

Le dispositif nécessaire pour l'opération des installations de haut fourneau conventionnelles comporte le haut fourneau en tant que tel, une ou plusieurs soufflantes d'air pour le vent, les cheminées, etc. et nécessite des investissements majeurs.

Une installation de haut fourneau à recyclage de gaz de gueulard requiert, de plus, une unité de séparation des gaz de l'air pour la fourniture d'un gaz riche en oxygène et une installation pour le traitement de gaz de gueulard et pour le recyclage de la fraction enrichie en CO, et de préférence également une installation pour le conditionnement de la fraction enrichie en CO₂.

Ce qui plus est, étant donné que le gaz de gueulard HFRG est généré par le HFRG même, l'opérateur du HFRG ne dispose pas, au début d'un démarrage à froid du HFRG, d'un flux (suffisant) de gaz de gueulard enrichi en CO pour être recyclé et injecté dans le haut fourneau.

Par conséquent, l'opérateur du HFRG doit tenir compte de l'absence de ce gaz réducteur au moment du démarrage à froid du HFRG.

Ainsi, l'opérateur peut prévoir une étape initiale transitoire avant le régime continu du HFRG pendant laquelle on injecte dans le HFRG un vent moins riche en oxygène qui consiste en de l'air comprimé, voire en de l'air comprimé enrichi en oxygène. Ledit air comprimé pour le démarrage du haut fourneau est fourni par un compresseur ou soufflante supplémentaire, ce qui nécessite un investissement supplémentaire non négligeable.

La présente invention a notamment pour but de limiter les investissements nécessaires en permettant une opération de l'installation métallurgique en dehors du régime continu du HFRG, et notamment un démarrage à froid, au moyen essentiellement de l'équipement nécessaire pour l'opération en régime continu du HFRG.

La présente invention concerne en particulier un procédé d'opération d'une installation sidérurgique comportant un HFRG. Selon ce procédé, l'installation de haut fourneau comprend une installation d'air, un haut fourneau et une unité de traitement des gaz de gueulard, appelée ci-après « installation de traitement de gaz ». L'installation d'air comprend une unité de compression et une unité de séparation des gaz de l'air appelée ci-après « unité de séparation d'air ».

Selon ce procédé, l'unité de compression génère de l'air comprimé et l'unité de séparation d'air (a) reçoit de l'air comprimé généré par l'unité de compression, et (b) divise l'air comprimé reçu en au moins un gaz de l'air riche en oxygène et un gaz de l'air riche en azote.

Un vent, en anglais « blast », est injecté dans le haut fourneau. Ce vent contient un gaz oxydant généré par l'installation d'air. Ledit gaz oxydant a une concentration en oxygène Cvox ≥ 21,0%vol (et jusqu'à 100,0%vol) et un débit Dvox.

Le haut fourneau génère un gaz de gueulard.

L'unité de traitement de gaz reçoit du gaz de gueulard généré par le haut fourneau et divise ce gaz de gueulard reçu en au moins un gaz de gueulard enrichi en CO₂ et en un gaz de gueulard enrichi en CO. Au moins une partie du gaz de gueulard enrichi en CO est recyclée et injectée dans le haut fourneau en tant que gaz réducteur avec un débit Drco. Afin de réduire les émissions de CO₂ de l'installation de haut fourneau, il est souhaitable qu'au moins une partie, voire la totalité du gaz de gueulard enrichi en CO₂ soit captée et/ou valorisée et/ou séquestrée.

Une caractéristique de l'invention est que l'origine et la composition du gaz oxydant du vent peuvent varier.

Suivant l'invention, la concentration en oxygène Cvox du gaz oxydant varie en fonction du débit Drco du gaz de gueulard enrichi en CO recyclé, le gaz oxydant du vent étant choisi parmi :
(a) de l'air comprimé généré par l'unité de compression d'air,
(b) du gaz de l'air riche en oxygène généré par l'unité de séparation d'air,
(c) un mélange dudit air comprimé avec ledit gaz de l'air riche en oxygène,
(d) un mélange du gaz de l'air riche en oxygène avec du gaz de l'air riche en azote généré par l'unité de séparation d'air, et
(e) un mélange dudit air comprimé avec le gaz de l'air riche en oxygène et avec le gaz de l'air riche en azote.

Pendant
le procédé de fusion, on augmente la concentration Cvox du gaz oxydant quand le débit Drco du gaz de gueulard réducteur enrichi en CO recyclé augmente et on baisse la concentration Cvox du gaz oxydant quand le débit Drco du gaz de gueulard enrichi en CO recyclé baisse.

Le procédé suivant l'invention permet également de réguler le débit Dvox du gaz oxydant, notamment en fonction du débit Drco du gaz de gueulard enrichi en CO recyclé.

Il est à noter que, dans le contexte de la présente invention, l'unité de compression comporte généralement une multitude de soufflantes ou de compresseurs d'air.

De manière analogue, l'unité de séparation peut comporter une ou plusieurs installations de séparation des gaz de l'air.

Selon une forme de réalisation, le gaz oxydant constitue au moins 90%vol, voire la totalité du vent injecté dans le haut fourneau.

Il est évident que pour le réglage de la concentration Cvox et/ou le débit Dvox du gaz oxydant du vent, on tiendra également compte des autres paramètres du procédé de fusion qui impactent sur le besoin en oxygène du procédé, tels que l'état de marche du procédé de fusion, le type de fonte à obtenir, la qualité du coke, etc.

La concentration en oxygène Cvox et/ou le débit Dvox peuvent ainsi varier en fonction du débit Drco de gaz de gueulard enrichi en CO recyclé, mais pas exclusivement en fonction de ce débit Drco.

Le réglage de la concentration en oxygène Cvox et/ou le débit Dvox du gaz oxydant peut notamment être effectué suivant un programme prédéterminé ou être déterminé en temps réel (par exemple en fonction de mesures effectuées).

Le fait que, suivant l'invention, le gaz oxydant du vent peut être un des gaz ou mélanges de gaz cités ci-dessus permet une grande variation dans la concentration Cvox du gaz oxydant et donc du vent injecté dans le haut fourneau.

L'invention permet ainsi de régler et d'optimiser la concentration en oxygène Cvox du vent en fonction de la marche du HFRG, et ceci pendant toute la durée de l'opération du haut fourneau, y compris :
- lors du démarrage du haut fourneau, quand il n'y a pas de gaz de gueulard enrichi en CO recyclable ou quand ce flux de gaz de gueulard recyclable est plus bas qu'en régime continu du HFRG,
- en cas de pénurie de gaz de l'air riche en oxygène due à une production réduite par l'unité de séparation d'air ou à cause d'un besoin plus élevé de gaz de l'air riche en oxygène par une autre installation sur le site,
- en cas de pénurie de gaz de gueulard enrichi en CO recyclable due à une capacité de traitement réduite de l'unité de traitement de gaz,
- quand le haut fourneau est amené à opérer en régime non-HFRG, c'est-à-dire sans recyclage de gaz de gueulard.

L'invention permet ainsi d'adapter la concentration en oxygène Cvox du gaz oxydant du vent en fonction du flux de gaz de gueulard enrichi en CO recyclé.

Par exemple, l'invention permet de démarrer le haut fourneau avec un vent qui consiste en de l'air comprimé et de contrôler, voire de maintenir substantiellement constante la teneur en agents réducteurs (tels que le CO et H₂) dans l'atmosphère du haut fourneau malgré le débit Drco croissant de gaz de gueulard enrichi en CO (et donc réducteur) recyclé. Ceci peut être en particulier réalisé en passant d'un gaz oxydant consistant en de l'air comprimé en un gaz oxydant consistant en de l'air comprimé enrichi (le cas échéant, progressivement) en oxygène au moyen de gaz de l'air riche en oxygène.

De la même manière, il est également possible de contrôler le débit total de gaz injecté dans le haut fourneau, c'est-à-dire le débit de vent plus le débit Drco de gaz de gueulard enrichi en CO recyclé malgré les variations de ce dernier en régulant le débit Dvox du gaz oxydant du vent en fonction du débit Drco.

De manière analogue, quand le haut fourneau démarre avec un vent qui consiste en substance de l'air comprimé enrichi en gaz de l'air riche en oxygène, l'invention permet de contrôler la teneur en agents réducteurs dans l'atmosphère du four et/ou de contrôler le débit total de gaz injecté dans le haut fourneau malgré le débit Drco croissant de gaz de gueulard enrichi en CO recyclé. Ceci peut être réalisé dans le gaz oxydant du vent, en augmentant le rapport entre la quantité de gaz de l'air riche en oxygène et la quantité d'air comprimé, c'est à dire en augmentant l'enrichissement en oxygène du gaz oxydant et/ou en faisant varier le débit Dvox.

Comme indiqué ci-dessus, l'invention permet de manière analogue d'adapter l'opération du haut fourneau quand le débit Drco du gaz de gueulard enrichi en CO recyclé change pour d'autres raisons.

L'installation pour le traitement des gaz de gueulard peut notamment comprendre une unité choisie parmi une unité ou une combinaison d'unités de type (V)PSA (« Pressure Swing Adsorption » avec éventuellement une désorption sous Vide), ou de type cryogénique (aussi appelée CPU dans laquelle le CO2 est au moins condensé partiellement à une température inférieure à - 10°C) ou de type lavage chimique (par exemple : unité amine) ou de type lavage physique (type Selexol™, Rectisol™,...). Une unité particulièrement utile est décrite dans le brevet EP-B-189385 de la demanderesse.

L'unité de compression d'air comprend un ou plusieurs compresseurs d'air ou soufflantes d'air. L'unité de compression fournit avantageusement de l'air comprimé à une pression d'au moins 2,5 bar abs, de préférence entre 4,0 bar abs et 7,0 bar abs.

L'unité de séparation d'air peut consister en une seule ou en plusieurs installations de séparation des gaz de l'air, telles qu'un appareil à pompe ou à compression externe basé sur un procédé de type « double vaporiseur », « double colonne », « colonne de mélange ». Elle peut être dédiée uniquement à l'installation de haut fourneau. Elle peut toutefois également être implantée de manière à fournir du gaz de l'air riche en oxygène et/ou du gaz de l'air riche en azote à d'autres installations sur le site de l'installation de haut fourneau ou à proximité de ce site.

De manière utile, le gaz de l'air riche en oxygène généré par l'unité de séparation d'air présente une concentration en oxygène d'au moins 40,0 %vol et jusqu'à 100,0%vol, de préférence d'au moins 90,0%vol, voire 95,0%vol et encore de préférence d'au moins 99,5%vol.

D'autre part, la portion de gaz de l'air riche en azote générée par l'unité de séparation des gaz de l'air présente avantageusement une concentration en azote d'au moins 95,0 %vol et jusqu'à 100,0%vol, de préférence d'au moins 99,0%vol et encore de préférence d'au moins 99,9%vol.

Il est à noter que l'air comprimé et/ou le gaz de l'air riche en azote généré par l'installation d'air peuvent également être utilisés comme gaz de purge dans l'installation sidérurgique, par exemple pour purger l'installation de gaz ou pour purger le haut fourneau.

Quand il est envisagé de valoriser et/ou de séquestrer le gaz de gueulard enrichi en CO₂ généré par l'installation de traitement de gaz, ce gaz de gueulard enrichi en CO₂ présente de préférence une concentration en CO₂ d'au moins 50%vol (et jusqu'à 100%vol), de préférence d'au moins 90%vol, et encore de préférence d'au moins 95%vol.

D'autre part, le gaz de gueulard enrichi en CO, dont au moins une partie, voire la totalité, est normalement recyclée vers le haut fourneau, présente avantageusement une concentration en CO d'au moins 50%vol (et jusqu'à 100%vol), de préférence d'au moins 60%vol, et encore de préférence supérieure d'au moins 75%vol. Le gaz de gueulard enrichi en CO peut avantageusement également présenter une concentration en H₂ supérieure à 4%vol, de préférence d'au moins 10%vol et encore de préférence d'au moins 15%vol, et typiquement inférieure à 45%vol.

Selon un mode de réalisation de l'invention, quand le débit Drco de gaz de gueulard enrichi en CO recyclé est zéro, le flux de gaz de l'air consiste en de l'air comprimé et le haut fourneau opère en mode classique.

Ceci est notamment possible avec une forme de réalisation particulière de l'invention, selon laquelle le gaz oxydant du vent du haut fourneau consiste en :
(a) du gaz de l'air riche en oxygène, ou
(b) de l'air comprimé, ou
(c) un mélange du gaz de l'air riche en oxygène avec de l'air comprimé.

Dans ce cas, le gaz oxydant du vent est donc de l'air comprimé, du gaz de l'air riche en oxygène ou de l'air comprimé enrichi avec du gaz de l'air riche en oxygène.

Selon un mode d'opération alternatif de l'invention, quand le débit Drco du gaz de gueulard enrichi en CO recyclé est zéro, le gaz oxydant du vent consiste en un mélange de gaz de l'air riche en oxygène avec de l'air comprimé. Le gaz oxydant du vent est alors de l'air enrichi en oxygène et le haut fourneau opère typiquement en mode intermédiaire.

Ceci peut notamment être mis en oeuvre avec une forme de réalisation de l'invention dans laquelle le gaz oxydant du vent consiste en :
(a) du gaz de l'air riche en oxygène ou
(b) un mélange du gaz de l'air riche en oxygène avec de l'air comprimé.

Dans ce cas, le gaz oxydant du vent est soit de l'air comprimé enrichi en oxygène soit le gaz de l'air riche en oxygène généré par l'unité de séparation des gaz de l'air.

Il est également possible d'utiliser pour le gaz oxydant du vent uniquement des gaz générés par l'unité de séparation d'air. Dans ce cas, le gaz oxydant du vent consistera typiquement en :
(a) du gaz de l'air riche en oxygène ou
(b) un mélange du gaz de l'air riche en oxygène avec du gaz de l'air riche en azote.

Dans ce cas, la concentration en oxygène Dvox du gaz oxydant du vent est contrôlée par le rapport dans le gaz oxydant entre le gaz de l'air riche en azote et le gaz de l'air riche en oxygène, le gaz de l'air riche en azote (quand présent) étant un diluant (en termes de concentrations d'oxygène) pour le gaz de l'air riche en oxygène.

Dans l'opération d'un HFRG, la concentration en oxygène dans le gaz oxydant du vent est typiquement maximale quand le débit Drco du gaz de gueulard enrichi en CO recyclé atteint son maximum. Ainsi, quand le débit Drco du gaz de gueulard enrichi en CO recyclé atteint son maximum, le gaz oxydant du vent consiste de préférence totalement en du gaz de l'air riche en oxygène.

Le gaz de gueulard enrichi en CO recyclé peut être injecté dans le haut fourneau à différentes hauteurs. Il est ainsi possible d'injecter au moins une partie du gaz de gueulard enrichi en CO recyclé dans le haut fourneau à mi-cuve. On peut également injecter au moins une partie du gaz de gueulard enrichi en CO recyclé dans le haut fourneau substantiellement à la hauteur de l'injection du vent, mais séparément du vent. Pour une optimisation du procédé suivant l'invention, différents modes d'injection peuvent être combinés.

La présente invention concerne également une installation de haut fourneau adaptée pour la mise en oeuvre du procédé suivant l'invention.

L'installation de haut fourneau suivant l'invention comprend par conséquent :
- une installation d'air comprenant :
   1. une unité de compression d'air,
   2. une unité de séparation d'air,
- un haut fourneau, et
- une installation de traitement de gaz.

L'unité de compression d'air présente une entrée d'air atmosphérique et une sortie d'air comprimé. L'unité de séparation d'air présente une entrée d'air comprimé reliée à la sortie d'air comprimé de l'unité de compression. L'unité de séparation d'air présente aussi une sortie de gaz de l'air riche en oxygène et une sortie de gaz de l'air riche en azote. Le haut-fourneau comporte un gueulard par lequel les gaz de gueulard générés par le haut fourneau sont évacués. Le haut fourneau est aussi équipé de tuyères pour l'injection de vent dans le haut fourneau. Les tuyères sont reliées à l'installation d'air par un réseau d'alimentation de gaz de l'air. L'installation de traitement de gaz est reliée au gueulard du haut fourneau. L'installation de traitement de gaz présente une sortie de gaz de gueulard enrichi en CO₂ et une sortie de gaz de gueulard enrichi en CO. La sortie de gaz de gueulard riche en CO de l'installation de traitement de gaz est reliée, par une boucle de recyclage, à des injecteurs pour l'injection dans le haut fourneau d'un débit Drco de gaz de gueulard enrichi en CO. Dans le haut fourneau, le gaz de gueulard enrichi en CO agit en tant que gaz réducteur et réduit le besoin en coke du procédé de fusion. A ce propos, il est à signaler que le coke représente un coût important pour le procédé de fusion et le recyclage de gaz de gueulard enrichi en CO permet donc de réaliser des économies.

Le réseau d'alimentation de gaz de l'air, qui est typiquement un réseau de canalisations de gaz interconnectées, permet de relier les tuyères du haut fourneau à une ou plusieurs des sorties suivantes de l'installation d'air :
- la sortie d'air comprimé de l'unité de compression d'air,
- la sortie de gaz de l'air riche en oxygène de l'unité de séparation d'air,
- et de préférence également la sortie de gaz de l'air riche en azote de l'unité de séparation d'air.

Suivant l'invention, l'installation de haut fourneau de la revendication 14 comporte une unité de contrôle pour réguler le débit Dvox et la concentration en oxygène Cvox du gaz de l'air, dit gaz oxydant, fourni aux tuyères au moyen du réseau d'alimentation de gaz de l'air. Cette unité de contrôle est connectée à l'installation de traitement de gaz et/ou à la boucle de recyclage de manière à déterminer le débit Drco de gaz de gueulard enrichi en CO recyclé vers le haut fourneau. L'unité de contrôle règle alors la concentration en oxygène Cvox du gaz oxydant du vent en fonction de ce débit Drco.

De préférence, l'unité de contrôle règle également le débit Dvox du gaz oxydant vers les tuyères du haut fourneau.

Le réglage de la concentration en oxygène Cvox du gaz oxydant du vent et/ou le réglage du débit Dvox dudit gaz oxydant par l'unité de contrôle se fera normalement également en fonction d'autres paramètres du procédé, tels que l'état de marche du procédé de fusion, le type de fonte à obtenir, la qualité du coke, etc. A cette fin, l'unité de contrôle peut être préprogrammée au moyen d'un logiciel approprié.

Les moyens pour l'injection de gaz de gueulard enrichi en CO recyclé peuvent permettre l'injection de gaz de gueulard enrichi en CO recyclé dans le haut fourneau à différentes hauteurs, tel que notamment l'injection de gaz de gueulard enrichi en CO recyclé à mi-cuve, l'injection de gaz de gueulard enrichi en CO recyclé substantiellement à la hauteur de l'injection du vent mais séparément du vent, etc. ou une combinaison de plusieurs modes d'injection.

L'invention permet au HFRG de fonctionner en plusieurs modes :
- un mode dit « opération continue » ou mode « tout oxygène » avec (a) recyclage de gaz de gueulard enrichi en CO, et (b) injection d'un vent composé uniquement ou substantiellement uniquement de gaz de l'air riche en oxygène.
- un mode dit « opération à air » ou mode « classique » avec injection d'un vent composé uniquement ou substantiellement uniquement d'air comprimé ou composé uniquement ou substantiellement uniquement d'air comprimé enrichi en oxygène avec du gaz de l'air riche en oxygène dans des proportions jusqu'à 40%vol d'oxygène dans le vent.
- un mode intermédiaire avec un vent composé uniquement ou substantiellement uniquement d'air comprimé enrichi avec du gaz de l'air riche en oxygène au-delà de la proportion classique, c'est-à-dire au-delà de 40% vol d'oxygène dans le vent ou d'un mélange analogue (en teneur en oxygène) de gaz de l'air riche en oxygène avec du gaz de l'air riche en azote.

Le mode classique ou intermédiaire peut notamment être utilisé dans l'un des cas suivants (liste non exhaustive) :
- démarrage du haut fourneau et donc manque de gaz de gueulard enrichi en CO recyclable,
- manque de disponibilité d'oxygène sur l'installation de séparation de gaz de l'air,
- défaillance totale ou partielle de l'installation de traitement des gaz, provoquant un manque de disponibilité de gaz de gueulard enrichi en CO recyclable,
- situation économique particulière (par exemple sur le prix du coke ou du quota d'émission CO₂) justifiant une marche classique ou intermédiaire sans traitement de gaz de gueulard ou avec un traitement et donc recyclage réduit du gaz de gueulard.

Grâce à l'invention, le site sidérurgique présente un dispositif de production d'air comprimé pour son ou ses hauts fourneaux ainsi que son ou ses unités de séparation de gaz de l'air qui sont techniquement et économiquement optimisés par une plus grande flexibilité dans l'utilisation des installations présentes.

Ainsi,
- en cas d'un arrêt ou de marche réduite de l'une des unités de séparation d'air : on utilisera l'unité de compression d'air pour alimenter le haut fourneau en gaz de l'air en mode classique ou intermédiaire,
- en cas d'arrêt ou de marche réduite de l'unité de traitement de gaz de gueulard : on utilisera l'installation d'air pour générer un vent de haut fourneau au moyen d'air comprimé, au moyen d'un mélange de gaz de l'air riche en oxygène avec du gaz de l'air riche en azote, voire au moyen d'un mélange d'air comprimé avec du gaz de l'air riche en oxygène et le cas échéant, également avec du gaz de l'air riche en azote, tandis que
- en cas d'arrêt ou de marche réduite du haut fourneau : l'air comprimé généré par l'unité de compression d'air et/ou les gaz de l'air générés par l'unité de séparation d'air peuvent être utilisés pour d'autres applications sur le site sidérurgique ou à proximité de ce site.

Lorsque le haut fourneau doit être alimenté en mode classique, le gaz oxydant du vent peut donc être produit :
- soit directement par un compresseur de l'unité de compression d'air,
- soit par production d'un air synthétique à partir de gaz de l'air riche en oxygène et de gaz de l'air riche en azote produits par l'unité de séparation de gaz de l'air, ou
- une combinaison des deux.

L'invention offre ainsi une plus grande flexibilité et une plus grande sécurité dans l'opération d'un HFRG, moyennant un investissement limité afin de permettre la régulation contrôlée du débit Dv et de la concentration Cvox.

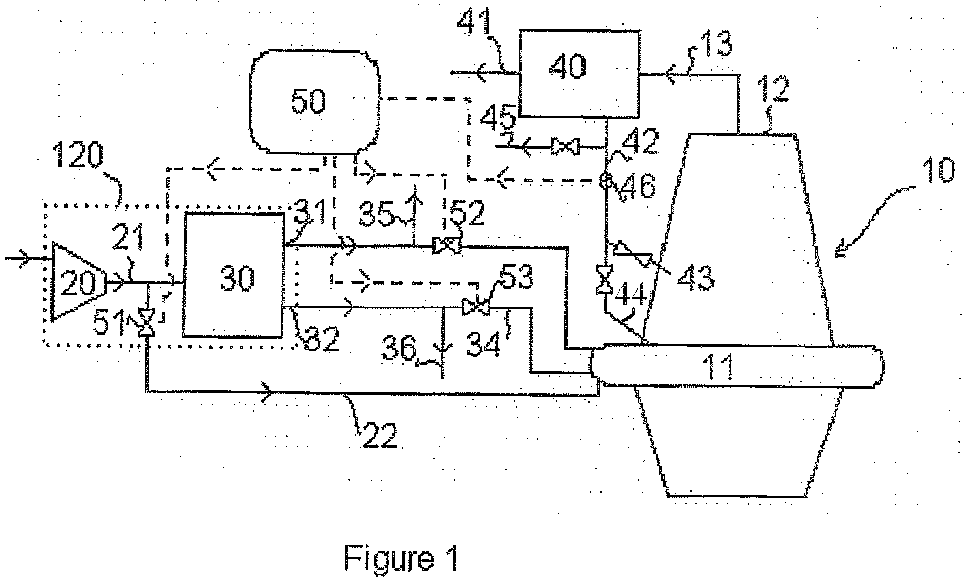

La figure est une représentation schématique d'un exemple d'une installation de haut fourneau suivant l'invention. Cette installation comporte :
- un haut fourneau 10,
- une installation d'air 120 comprenant une unité de compression d'air 20, et une unité de séparation d'air 30,
- une installation de traitement de gaz de gueulard 40, et
- une unité de contrôle 50.

L'unité d'air 120 est reliée à la ceinture de vent 11 du haut fourneau 10 par un réseau de canalisations d'alimentation de gaz de l'air. Les tuyères pour l'injection du vent dans le haut fourneau sont montées sur ladite ceinture 11.

L'unité de compression d'air 20 (une seule soufflante est schématiquement représentée) fournit de l'air comprimé à l'unité de séparation d'air 30 via la canalisation 21.

L'unité de séparation d'air 30 a une sortie 31 pour du gaz de l'air riche en oxygène et une sortie 32 pour du gaz de l'air riche en azote 32.

Les sorties 31 et 32 sont reliées à la ceinture 11 par respectivement les canalisations 33 et 34.

La ceinture 11 est également reliée à la sortie de l'unité de compression d'air 20 par la canalisation 22.

La branche 35 de la canalisation 33 permet d'amener une partie au moins du gaz de l'air riche en oxygène généré par l'unité de séparation d'air 30 vers une autre entité de l'installation ayant un besoin de gaz de l'air riche en oxygène. La branche 36 de la canalisation 34 permet de manière analogue de fournir au moins une partie du gaz de l'air riche en azote à une autre entité sur ou à proximité du site sidérurgique ou au haut fourneau lui-même (par exemple si le gaz de l'air riche en azote est utilisé comme agent de refroidissement pour le système de charge du haut fourneau).

En opération, le haut fourneau 10 génère du gaz de gueulard qui est évacué du haut fourneau 10 par le gueulard 12.

Le conduit d'évacuation 13 amène le gaz de gueulard vers l'installation de traitement de gaz 40 qui sépare le gaz de gueulard en un gaz enrichi en CO₂ et un gaz enrichi en CO.

Par le conduit 41, le gaz de gueulard enrichi en CO₂ peut être transporté vers une installation de capture et de séquestration (non-illustrée).

La boucle de recyclage 42 amène le gaz de gueulard enrichi en CO vers les injecteurs 43, 44 pour son injection en tant que gaz réducteur dans le haut fourneau 10.

La branche 45 de la boucle de recyclage 42 permet de transporter au moins une partie du gaz de gueulard enrichi en CO vers d'autres installations/unités consommatrices de CO.

Dans la figure, un seul injecteur 43 et un seul injecteur 44 sont montrés. En pratique, le haut fourneau 10 est muni d'un jeu de injecteurs 43 et/ou d'un jeu de injecteurs 44 qui peuvent être régulièrement répartis autour de la circonférence du haut fourneau 10.

Les injecteurs 43 sont des injecteurs dits de mi-cuve et injectent du gaz de gueulard enrichi en CO à un niveau au-dessus du niveau d'injection du vent. Les injecteurs 44 permettent d'injecter du gaz de gueulard enrichi en CO au même niveau du vent, mais séparément de l'injection du vent par les tuyères.

Le débit Drco de gaz de gueulard enrichi en CO recyclé vers le haut fourneau 10 est détecté par le débitmètre 46 et transmis à l'unité de contrôle 50 préprogrammée. L'unité de contrôle 50 détermine en fonction dudit débit Drco et les autres paramètres du procédé de fusion, le débit Dvox et la concentration en oxygène Cvox du gaz oxydant à injecter dans le haut fourneau pour son opération optimisée et commande les vannes 51, 52 et 53 de manière à réaliser cette concentration Cvox et ce débit Dvox en réglant les débits d'air comprimé, de gaz de l'air riche en oxygène et de gaz de l'air riche en azote envoyé à la ceinture de vent 11. Ledit gaz oxydant est alors injecté comme vent dans le haut fourneau 10.

### EXEMPLE

Le HFRG 10 schématiquement représenté dans la figure est conçu pour la production de 2 millions de tonnes de fonte par an.

Le volume d'oxygène requis pour cette production annuelle est de 400 millions de Nm3 d'oxygène par an en régime continu.

Ce régime continu correspond au mode « tout oxygène » du haut fourneau, pendant lequel le vent injecté dans le haut fourneau 10 consiste en un gaz de l'air riche en oxygène (à 87%vol O2) fourni par l'unité de séparation d'air 30 et pendant lequel du gaz de gueulard enrichi en CO est recyclé et injecté dans le haut fourneau 10.

Cette unité de séparation d'air est conçue de manière à permettre une production de 400 millions de Nm3 de gaz de l'air riche en oxygène et 1600 millions de Nm3 de gaz de l'air riche en azote par an.

En cas de panne de l'unité de séparation des gaz de gueulard, en fonction de la durée de la panne, l'installation suivant l'invention permet :
- soit d'arrêter l'unité de séparation de gaz de l'air 30 et d'utiliser le compresseur de l'unité de compression d'air 20 pour les besoins en vent du haut fourneau 10,
- soit, en cas de panne courte, de ne pas arrêter l'unité de séparation de gaz de l'air 30 et de fabriquer un vent synthétique à partir du gaz de l'air riche en azote et du gaz de l'air riche en oxygène disponibles.

Ladite installation suivant l'invention présente ainsi l'avantage majeur de permettre une opération optimisée du haut fourneau à tout stade du procédé sans investissements supplémentaires majeurs en matériel.

Afin d'encore optimiser l'utilisation du matériel présent sur le site sidérurgique, l'opération du haut fourneau suivant l'invention peut notamment être combinée avec un procédé d'intégration d'une ASU dans une installation de haut fourneau tel que décrit dans WO-A-2007/099246.

Bien que l'invention soit décrite ci-dessus en rapport avec la sidérurgie, il sera apparent pour l'homme du métier que le concept de cette invention peut s'appliquer à toute application dans laquelle une unité industrielle peut fonctionner en mode « classique », ou « tout oxygène », ou éventuellement avec un vent ou une atmosphère privilégiée (par exemple tout azote) et pour laquelle on souhaite optimiser le dispositif de production d'air pour prendre en compte ces deux modes.

## Revendications

1. Procédé d'opération d'une installation de haut fourneau, ladite installation comprenant :
• une installation d'air (120) comprenant :
1. une unité de compression (20) et
2. une unité de séparation d'air (30),
• un haut fourneau (10),
• une installation de traitement de gaz (40),
procédé dans lequel :
• l'unité de compression (20) génère de l'air comprimé,
• l'unité de séparation d'air (30) (a) reçoit de l'air comprimé généré par l'unité de compression (20) et (b) divise l'air comprimé reçu en au moins un gaz de l'air riche en oxygène et un gaz de l'air riche en azote,
• on injecte dans le haut fourneau (10) un vent contenant un gaz oxydant généré par l'installation d'air (120), ledit gaz oxydant ayant une concentration en oxygène Cvox ≥ 21,0%vol et un débit Dvox,
• le haut fourneau (10) génère un gaz de gueulard,
• l'unité de traitement de gaz (40) reçoit du gaz de gueulard généré par le haut fourneau (10) et divise le gaz de gueulard reçu en au moins un gaz de gueulard enrichi en CO₂ et un gaz de gueulard enrichi en CO,
au moins une partie du gaz de gueulard enrichi en CO est recyclée et injectée dans le haut fourneau (10) en tant que gaz réducteur avec un débit Drco,
le procédé étant **caractérisé en ce que** le gaz oxydant du vent du haut fourneau (10) est choisi parmi :
(a) de l'air comprimé généré par l'unité de compression d'air (20), ou
(b) du gaz de l'air riche en oxygène généré par l'unité de séparation d'air (30), ou
(c) un mélange dudit air comprimé avec ledit gaz de l'air riche en oxygène, ou
(d) un mélange dudit gaz de l'air riche en oxygène avec du gaz de l'air riche en azote généré par l'unité de séparation d'air (30), ou
(e) un mélange dudit air comprimé avec ledit gaz de l'air riche en oxygène et avec ledit gaz de l'air riche en azote, et
**en ce que** l'on régule la concentration Cvox du gaz oxydant en fonction du débit Drco du gaz de gueulard enrichi en CO recyclé : la concentration Cvox du gaz oxydant étant augmentée quand le débit Drco du gaz de gueulard enrichi en CO recyclé augmente et la concentration Cvox du gaz oxydant étant baissée quand le débit Drco du gaz de gueulard enrichi en CO recyclé baisse.

2. Procédé suivant la revendication 1, dans lequel on régule également le débit Dvox du gaz oxydant en fonction du débit Drco du gaz de gueulard enrichi en CO recyclé.

3. Procédé suivant l'une quelconque des revendications précédentes, dans lequel le gaz de gueulard enrichi en CO₂ présente une concentration en CO₂ d'au moins 50%vol, de préférence d'au moins 90%vol, et encore de préférence d'au moins 95%vol.

4. Procédé suivant l'une quelconque des revendications précédentes, dans lequel au moins une partie du gaz de gueulard enrichi en CO₂ est captée et/ou valorisée et/ou séquestrée.

5. Procédé suivant l'une quelconque des revendications précédentes, dans lequel le gaz de gueulard enrichi en CO recyclé présente une concentration en CO entre 50%vol et 100%vol, de préférence supérieure à 60%vol, et encore de préférence supérieure à 75%vol.

6. Procédé suivant l'une quelconque des revendications précédentes, dans lequel le gaz de gueulard enrichi en CO recyclé présente une concentration en H₂ supérieure à 4%vol, de préférence d'au moins 10%vol et encore de préférence d'au moins 15%vol.

7. Procédé suivant l'une quelconque des revendications précédentes, dans lequel le gaz oxydant du vent est choisi parmi :
(a) de l'air comprimé généré par l'unité de compression d'air,
(b) du gaz de l'air riche en oxygène généré par l'unité de séparation d'air, et
(c) un mélange dudit air comprimé avec ledit gaz de l'air riche en oxygène.

8. Procédé suivant l'une quelconque des revendications précédentes, dans lequel, quand le débit Drco du gaz de gueulard enrichi en CO recyclé est zéro, le gaz oxydant est de l'air comprimé.

9. Procédé suivant l'une quelconque des revendications 1 à 7, dans lequel le gaz oxydant du vent est choisi parmi :
(a) du gaz de l'air riche en oxygène généré par l'unité de séparation d'air (30), et
(b) un mélange dudit gaz de l'air riche en oxygène avec de l'air comprimé généré par l'unité de compression d'air (20).

10. Procédé suivant la revendication 9, dans lequel, quand le débit Drco du gaz de gueulard enrichi en CO recyclé est zéro, le gaz oxydant est un mélange dudit gaz de l'air riche en oxygène avec de l'air comprimé.

11. Procédé suivant l'une quelconque des revendications 1 à 7, dans lequel le gaz oxydant du vent est choisi parmi :
(a) du gaz de l'air riche en oxygène généré par l'unité de séparation d'air (30), et
(b) un mélange dudit gaz de l'air riche en oxygène avec du gaz de l'air riche en azote généré par l'unité de séparation d'air (30).

12. Procédé suivant la revendication 11, dans lequel, quand le débit Drco du gaz de gueulard enrichi en CO recyclé est zéro, le gaz oxydant est ledit gaz de l'air riche en oxygène.

13. Procédé suivant l'une quelconque des revendications précédentes, dans lequel, quand le débit le débit Drco du gaz de gueulard enrichi en CO recyclé atteint son maximum, le gaz oxydant est du gaz de l'air riche en oxygène généré par l'unité de séparation d'air (30).

14. Installation de haut fourneau comprenant :
• une installation d'air (120) comprenant :
1. une unité de compression d'air (20),
2. une unité de séparation d'air (30),
• un haut fourneau (10) et
• une installation de traitement de gaz (40),
installation de haut fourneau dans laquelle :
• l'unité de compression d'air (20) présente une entrée d'air atmosphérique et une sortie d'air comprimé,
• l'unité de séparation d'air présente (30) (a) une entrée d'air comprimé reliée à la sortie d'air comprimé de l'unité de compression d'air (20) et (b) une sortie (31) de gaz de l'air riche en oxygène et une sortie (32) de gaz de l'air riche en azote,
• le haut-fourneau (10) (a) comporte un gueulard (12) et (b) est équipé de tuyères pour l'injection de vent dans le haut fourneau (10), lesdites tuyères étant reliées à l'installation d'air (120) par un réseau d'alimentation de gaz de l'air,
• l'installation de traitement de gaz (40) (a) est reliée au gueulard (12) du haut fourneau (10) et (b) présente une sortie de gaz de gueulard enrichi en CO₂ et une sortie de gaz de gueulard enrichi en CO,
• la sortie de gaz de gueulard enrichi en CO étant reliée par une boucle de recyclage (42) à des injecteurs (43, 44) pour l'injection dans le haut fourneau (10) d'un débit Drco de gaz de gueulard enrichi en CO,
l'installation étant **caractérisée en ce que** :
• le réseau d'alimentation de gaz de l'air permet de relier les tuyères à une ou plusieurs des sorties suivantes :
• la sortie d'air comprimé de l'unité de compression d'air (20),
• la sortie (31) de gaz de l'air riche en oxygène de l'unité de séparation d'air (30),
• et de préférence également la sortie (32) de gaz de l'air riche en azote de l'unité de séparation d'air (30),
et **en ce que** l'installation de haut fourneau comporte également une unité de contrôle (50) pour réguler le débit et la concentration en oxygène Cvox du gaz de l'air fourni aux tuyères au moyen du réseau d'alimentation de gaz de l'air, ladite unité de contrôle (50) étant connectée à l'installation de traitement de gaz (40) et/ou à la boucle de recyclage (42) et contrôle la concentration en oxygène Cvox du gaz de l'air ainsi fourni en fonction du débit Drco du gaz de gueulard enrichi en CO recyclé de manière à ce que la concentration Cvox du gaz oxydant est augmentée quand le débit Drco du gaz de gueulard enrichi en CO recyclé augmente et la concentration Cvox du gaz oxydant est baissée quand le débit Drco du gaz de gueulard enrichi en CO recyclé baisse.

## Patentansprüche

1. Verfahren zum Betrieb einer Hochofenanlage, wobei die Anlage Folgendes umfasst:
• eine Luftanlage (120), umfassend:
1. eine Verdichtungseinheit (20) und
2. eine Luftzerlegungseinheit (30),
• einen Hochofen (10),
• eine Gasbehandlungsanlage (40),
wobei im Verfahren:
• die Verdichtungseinheit (20) Druckluft erzeugt,
• die Luftzerlegungseinheit (30) (a) von der Verdichtungseinheit (20) erzeugte Druckluft empfängt und (b) die empfangene Druckluft in mindestens ein sauerstoffreiches Luftgas und ein stickstoffreiches Luftgas teilt,
• in den Hochofen (10) ein Wind eingeblasen wird, der ein von der Luftanlage (120) erzeugtes Oxidationsmittelgas umfasst, wobei das Oxidationsmittelgas eine Sauerstoffkonzentration Cvox ≥ 21,0 Vol.-% und einen Durchsatz Dvox aufweist,
• der Hochofen (10) ein Gichtgas erzeugt,
• die Gasbehandlungsanlage (40) das vom Hochofen (10) erzeugte Gichtgas empfängt und das empfangene Gichtgas in mindestens ein mit CO₂ angereichertes Gichtgas und ein mit CO angereichertes Gichtgas teilt,
mindestens ein Teil des mit CO angereicherten Gichtgases recycelt und als Reduktionsmittelgas mit einem Durchsatz Drco in den Hochofen (10) eingeblasen wird,
wobei das Verfahren **dadurch gekennzeichnet ist, dass** das Oxidationsmittelgas des Windes des Hochofens (10) ausgewählt ist aus:
(a) von der Luftverdichtungseinheit (20) erzeugter Druckluft, oder
(b) von der Luftzerlegungseinheit (30) erzeugtem sauerstoffreichem Luftgas, oder
(c) einem Gemisch der Druckluft mit dem sauerstoffreichen Luftgas, oder
(d) einem Gemisch des sauerstoffreichen Luftgases mit dem stickstoffreichen Luftgas, das von der Luftzerlegungseinheit (30) erzeugt wird, oder
(e) einem Gemisch der Druckluft mit dem sauerstoffreichen Luftgas und mit dem stickstoffreichen Luftgas, und
dadurch, dass die Konzentration Cvox des Oxidationsmittelgases in Abhängigkeit vom Durchsatz Drco des recycelten mit CO angereicherten Gichtgases reguliert wird: die Konzentration Cvox des Oxidationsmittelgases wird erhöht, wenn der Durchsatz Drco des recycelten, mit CO angereicherten Gichtgases zunimmt, und die Konzentration Cvox des Oxidationsmittelgases wird erniedrigt, wenn der Durchsatz Drco des recycelten, mit CO angereicherten Gichtgases abnimmt.

2. Verfahren nach Anspruch 1, wobei auch der Durchsatz Dvox des Oxidationsmittelgases in Abhängigkeit vom Durchsatz Drco des recycelten, mit CO angereicherten Gichtgases reguliert wird.

3. Verfahren nach einem der vorstehenden Ansprüche, wobei das mit CO₂ angereicherte Gichtgas eine CO₂-Konzentration von mindestens 50 Vol.-%, vorzugsweise mindestens 90 Vol.-% und noch mehr bevorzugt mindestens 95 Vol.-% aufweist.

4. Verfahren nach einem der vorstehenden Ansprüche, wobei zumindest ein Teil des mit CO₂ angereicherten Gichtgases aufgefangen und/oder verwertet und/oder gespeichert wird.

5. Verfahren nach einem der vorstehenden Ansprüche, wobei das recycelte, mit CO angereicherte Gichtgas eine CO-Konzentration zwischen 50 Vol.% und 100 Vol.-%, vorzugsweise von mehr als 60 Vol.-% und noch mehr bevorzugt von mehr als 75 Vol.-% aufweist.

6. Verfahren nach einem der vorstehenden Ansprüche, wobei das mit CO angereicherte Gichtgas eine H₂-Konzentration von mehr als 4 Vol.-%, vorzugsweise mindestens 10 Vol.-% und noch mehr bevorzugt mindestens 15 Vol.-% aufweist.

7. Verfahren nach einem der vorstehenden Ansprüche, wobei das Oxidationsmittelgas des Windes ausgewählt ist aus:
(a) von der Luftverdichtungseinheit erzeugter Druckluft,
(b) von der Luftzerlegungseinheit erzeugtem sauerstoffreichem Luftgas, und
(c) einem Gemisch der Druckluft mit dem sauerstoffreichen Luftgas.

8. Verfahren nach einem der vorstehenden Ansprüche, wobei es sich beim Oxidationsmittelgas um Druckluft handelt, wenn der Durchsatz Drco des recycelten, mit CO angereicherten Gichtgases Null beträgt.

9. Verfahren nach einem der Ansprüche 1 bis 7, wobei das Oxidationsmittelgas des Windes ausgewählt ist aus:
(a) von der Luftzerlegungseinheit (30) erzeugtem sauerstoffreichem Luftgas und
(b) einem Gemisch des sauerstoffreichen Luftgases mit Druckluft, die von der Luftverdichtungseinheit (20) erzeugt wird.

10. Verfahren nach Anspruch 9, wobei es sich beim Oxidationsmittelgas um ein Gemisch des sauerstoffreichen Luftgases mit Druckluft handelt, wenn der Durchsatz Drco des recycelten, mit CO angereicherten Gichtgases Null beträgt.

11. Verfahren nach einem der Ansprüche 1 bis 7, wobei das Oxidationsmittelgas des Windes ausgewählt ist aus:
(a) von der Luftzerlegungseinheit (30) erzeugtem sauerstoffreichem Luftgas und
(b) einem Gemisch des sauerstoffreichen Luftgases mit dem stickstoffreichen Luftgas, das von der Luftzerlegungseinheit (30) erzeugt wird.

12. Verfahren nach Anspruch 11, wobei es sich beim Oxidationsmittelgas um das sauerstoffreiche Luftgas handelt, wenn der Durchsatz Drco des recycelten, mit CO angereicherten Gichtgases Null beträgt.

13. Verfahren nach einem der vorstehenden Ansprüche, wobei es sich beim Oxidationsmittelgas um das von der Luftzerlegungseinheit (30) erzeugte sauerstoffreiche Luftgas handelt, wenn der Durchsatz Drco des recycelten, mit CO angereicherten Gichtgases sein Maximum erreicht.

14. Hochofenanlage, umfassend:
• eine Luftanlage (120), umfassend:
1. eine Luftverdichtungseinheit (20),
2. eine Luftzerlegungseinheit (30),
• einen Hochofen (10), und
• eine Gasbehandlungsanlage (40),
wobei in der Hochofenanlage:
• die Luftverdichtungseinheit (20) einen Einlass für atmosphärische Luft und einen Druckluftauslass aufweist,
• die Luftzerlegungseinheit (30) (a) einen mit dem Druckluftauslass der Luftverdichtungseinheit (20) verbundenen Drucklufteinlass und (b) einen Auslass (31) für sauerstoffreiches Luftgas und einen Auslass (32) für stickstoffreiches Luftgas aufweist,
• der Hochofen (10) (a) eine Gicht (12) beinhaltet und (b) mit Düsen zum Einblasen von Wind in den Hochofen (10) ausgestattet ist, wobei die Düsen durch ein Luftgasversorgungsnetz mit der Luftanlage (120) verbunden sind,
• die Gasbehandlungsanlage (40) (a) mit der Gicht (12) des Hochofens (10) verbunden ist und (b) einen Auslass für mit CO₂ angereichertes Gichtgas und einen Auslass für mit CO angereichertes Gichtgas aufweist,
• der Auslass für mit CO angereichertes Gichtgas durch eine Recyclingschleife (42) mit den Injektoren (43, 44) zum Injizieren eines Durchsatzes Drco des mit CO angereicherten Gichtgases in den Hochofen (10) verbunden ist,
wobei die Anlage **dadurch gekennzeichnet, dass**:
• das Luftgasversorgungsnetz ein Verbinden der Düsen mit einem oder mehreren der folgenden Auslässe ermöglicht:
• dem Druckluftauslass der Luftverdichtungseinheit (20),
• dem Auslass (31) für sauerstoffreiches Luftgas der Luftzerlegungseinheit (30),
• und vorzugsweise auch mit dem Auslass (32) für stickstoffreiches Luftgas der Luftzerlegungseinheit (30),
und dadurch, dass die Hochofenanlage auch eine Steuereinheit (50) zum Regulieren des Sauerstoffdurchsatzes und der Sauerstoffkonzentration Cvox des mittels des Luftgasversorgungsnetzes den Düsen zugeführten Luftgases beinhaltet, wobei die Steuereinheit (50) mit der Gasbehandlungsanlage (40) und/oder der Recyclingschleife (42) verbunden ist und die Sauerstoffkonzentration Cvox des so zugeführten Luftgases in Abhängigkeit vom Durchsatz Drco des recycelten, mit CO angereicherten Gichtgases so steuert, dass die Konzentration Cvox des Oxidationsmittelgases erhöht wird, wenn der Durchsatz Drco des recycelten, mit CO angereicherten Gichtgases zunimmt, und die Konzentration Cvox des Oxidationsmittelgases erniedrigt wird, wenn der Durchsatz Drco des recycelten, mit CO angereicherten Gichtgases abnimmt.

## Claims

1. Method for operating a blast furnace installation, said installation comprising:
• an air installation (120) comprising:
1) a compression unit (20) and
2) an air separation unit (30),
• a blast furnace (10),
• a gas treatment installation (40),
method wherein:
• the compression unit (20) generates compressed air,
• the air separation unit (30) (a) receives compressed air generated by the compression unit (20) and (b) splits the received compressed air into at least one oxygen-enriched air gas and one nitrogen-enriched air gas,
• a flow containing an oxidising gas generated by the air installation (120) is injected in the blast furnace (10), said oxidising gas having an oxygen concentration Cvox ≥ 21.0%vol and a flow rate Dvox,
• the blast furnace (10) generates a top gas,
• the gas treatment unit (40) receives a top gas generated by the blast furnace (10) and splits the received top gas into at least one CO₂-enriched top gas and one CO-enriched top gas,
at least one part of the CO-enriched top gas is recycled and injected into the blast furnace (10) as a reductive gas with a flow rate Drco,
the method being **characterised in that** the oxidising gas from the flow of the blast furnace is selected among:
a) compressed air generated by the air compression unit (20), or
b) oxygen-enriched air gas generated by the air separation unit (30), or
c) a mixture of said compressed air and said oxygen-enriched air gas, or
d) a mixture of said oxygen-enriched air gas and nitrogen-enriched air gas generated by the air separation unit (30), or
e) a mixture of said compressed gas and said oxygen-enriched air gas and said nitrogen-enriched air gas, and
**in that** the concentration Cvox of the oxidising gas is regulated as a function of the flow Drco of the top gas enriched in recycled CO: the concentration Cvox of the oxidising gas being increased when the flow rate Drco of the top gas enriched in recycled CO increases, and the concentration Cvox of the oxidising gas being lowered when the flow rate Drco of top gas enriched in recycled CO is lowered.

2. Method according to claim 1, wherein the flow rate Dvox of oxidising gas is regulated as a function of the flow rate Drco of the top gas enriched in recycled CO.

3. Method according to any one of the preceding claims, wherein the CO₂-enriched top gas has a CO₂ concentration of at least 50%vol, preferably of at least 90%vol, and more preferably of at least 95%vol.

4. Method according to any one of the preceding claims, wherein at least a part of the CO₂-enriched gas is captured and/or valorised and/or sequestered.

5. Method according to any one of the preceding claims, wherein the top gas enriched in recycled CO has a CO concentration of between 50%vol and 100%vol, preferably greater than 60%vol and more preferably greater than 75%vol.

6. Method according to any one of the preceding claims, wherein the top gas enriched in recycled CO has an H₂ concentration greater than 4%vol, preferably of at least 10%vol and more preferably of at least 15%vol.

7. Method according to any one of the preceding claims, wherein the oxidising gas of the flow is selected among:
a) compressed air generated by the air compression unit,
b) oxygen-enriched air gas generated by the air separation unit, and
c) a mixture of said compressed air and said oxygen-enriched air gas.

8. Method according to any one of the preceding claims, wherein, when the flow rate Drco of the top gas enriched in recycled CO falls to zero, the oxidising gas is compressed air.

9. Method according to any one of claims 1 to 7, wherein the oxidising gas of the flow is selected among:
a) oxygen-enriched air gas generated by the air separation unit (30), and
b) a mixture of said oxygen-enriched air gas and compressed air generated by the air compression unit (20).

10. Method according to claim 9, wherein, when the flow rate Drco of the top gas enriched in recycled CO falls to zero, the oxidising gas is a mixture of said oxygen-enriched air gas and compressed air.

11. Method according to any one of claims 1 to 7, wherein the oxidising gas of the flow is selected among:
a) oxygen-enriched air gas generated by the air separation unit (30), and
b) a mixture of said oxygen-enriched air gas and nitrogen-enriched air gas generated by the air separation unit (30).

12. Method according to claim 11, wherein, when the flow rate Drco of the top gas enriched in recycled CO falls to zero, the oxidising gas is said oxygen-enriched air gas.

13. Method according to any one of the preceding claims, wherein, when the flow rate Drco of the top gas enriched in recycled CO reaches its maximum, the oxidising gas is oxygen-enriched air gas generated by the air separation unit (30).

14. Blast furnace installation comprising:
• an air installation (120) comprising:
1) an air compression unit (20),
2) an air separation unit (30),
• a blast furnace (10) and
• a gas treatment installation (40),
blast furnace installation wherein:
• the air compression unit (20) has an atmospheric air inlet and a compressed air output,
• the air separation unit (30) (a) has a compressed air inlet connected to the compressed air output of the air compression unit (20) and (b) an output (31) for the oxygen-enriched air gas and an output (32) for the nitrogen-enriched air gas,
• the blast furnace (10) (a) comprises a throat (12) and (b) is provided with nozzles for the injection of the flow into the blast furnace (10), said nozzles being connected to the air installation (120) by an air gas supply network,
• the gas treatment installation (40) (a) is connected to the throat (12) of the blast furnace (10) and (b) has an output for the CO₂-enriched top gas and an output for the CO-enriched top gas,
• the output for the CO-enriched top gas being connected by a recycling loop (42) to injectors (43, 44) for the injection into the blast furnace (10) of a flow rate Drco of CO-enriched top gas,
the installation being **characterised in that**:
• the air gas supply network enables to connect the nozzles to one or several of the following outputs:
• the output of compressed air from the air compression unit (20),
• the output (31) of oxygen-enriched air gas from the air separation unit (30),
• and preferably also the output (32) of nitrogen-enriched air gas from the air separation unit (30),
and **in that** the blast furnace installation also comprises a control unit (50) to regulate the flow rate and the concentration in oxygen Cvox of the air gas supplied to the nozzles by means of the air gas supply network, said control unit (50) being connected to the gas treatment installation (40) and/or to the recycling loop (42) and controls the oxygen concentration Cvox of the air gas thus supplied as a function of the flow rate Drco of the top gas enriched in recycled CO so that the concentration Cvox of the oxidising gas is increased when the flow rate Drco of the top gas enriched in recycled CO increases and the concentration Cvox of the oxidising gas is lowered when the flow rate Drco of the top gas enriched in recycled CO is lowered.
